# EUROPEAN PATENT SPECIFICATION

(11) **EP 1 444 886 B1**
(45) Date of publication and mention of the grant of the patent: **28.12.2005**
(21) Application number: 03075288.5
(22) Date of filing: 31.01.2003
(51) Int. Cl.: A01G 9/10, A01G 9/08

(54) **Multiple transplanting apparatus**
Mehrfachpflanzensetzmaschine
Multitransplanteuse

(43) Date of publication of application: 11.08.2004
(73) Proprietor: Visser 's-Gravendeel Holding B.V., 3295 KH 's-Gravendeel (NL)
(72) Inventor: Van Voorthuizen, Albertus Jacobus, 3297 GH Puttershoek (NL)
(74) Representative: Eveleens Maarse, Pieter

(56) References cited:
- EP-A- 0 672 343
- EP-A- 1 062 864
- DE-U- 29 514 809
- FR-A- 2 802 386
- NL-A- 7 900 943

## Description

The invention relates to an apparatus for transplanting plants from containers with small cavities to containers with large cavities according to claim 1, a combination of a transplanting apparatus and at least two containers with small cavities according to claim 8 and a method for transplanting plants according to claim 14.

Transplanting apparatuses are used during the transplanting of plants from a first container to a second container. A transplanting apparatus according to the preamble of claim 1 is known from FR-A-2 802 386. In FR-A-2 802 386 a larger capacity is obtained by using multiple grippers gripping plants from the same container.

During the growth of the plants, the size of the plant increases, both in and above the soil or substrate. After some time the plant must be transplanted into a larger container. This could be from a tray with a large number of small cavities to a tray with less, but larger cavities, or from a tray to a pot.

It is a known problem to increase the capacity of such transplanting apparatuses. The aim of the present invention is to further increase the capacity without substantially increasing the costs.

This aim is reached with a transplanting apparatus according to claim 1, a combination of a transplanting apparatus and at least two containers with small cavities according to claim 8 and a method for transplanting plants according to claim 14.

Since multiple plants will be gripped from two or more containers, the capacity is increased.

To further increase the capacity, another embodiment proposes to provide the moving and gripping apparatus with at least a third gripper, in which the first, second and at least third gripper are located on a single line.

An embodiment teaches that the distance between the grippers is adaptable. This allows the plants from the containers with a certain pitch to be supplied to containers with another pitch. This pitch can relate on the pitch between the mutual containers, but also on the pitch between the cavities within the containers.

According to another embodiment, the first transport means have been adapted for supplying containers with small cavities with a first pitch between the containers; the second transport means have been adapted for supplying containers with large cavities with a second pitch between the containers; and wherein the distance between the grippers equals the first pitch at the moment of gripping the plants from the containers with small cavities. With this embodiment the problem that the plants to be gripped could be obstructed by leaves of adjacent plants is obviated.

According to yet another embodiment, the distance between the grippers locating the plants in the containers with large cavities equals the first pitch. The application of these features makes the distance between the plants equal during the gripping in the first containers until the position in the second containers. This obviates means for amending the mutual distance, which would otherwise be necessary during the transplant between the containers.

According to a more specific embodiment the first transport means have been adapted for supplying containers with more than one cavity per container, and second transport means have been adapted to supply containers with only one cavity per container. This embodiment is especially applicable for the transplanting of plants from trays to pots.

Although numerous constructions, like a robot, are possible to implement the apparatus according to the embodiment, it is attractive when the direction of transport of both transport means extends parallel, the carrier comprises a longitudinal element on which the grippers have been provided, and, when the carrier is movable substantially perpendicular to the direction of transport of the transport means.

A substantial flexibility is obtained when the apparatus comprises a gantry construction of which the legs are located at both sides of the transport means, and wherein the carrier is movably connected to the horizontal part of the gantry construction.

Subsequently the present invention will be elucidated with the help of the accompanying figures wherein :
figure 1 is a perspective diagrammatic view of a first embodiment of the apparatus according to the present invention;
figure 2 is a schematic plan view of an apparatus which does not form part of the invention as it does not show that multiple plants are gripped simultaneously from multiple containers;
figure 3 is a schematic plan view from yet another embodiment;
figure 4 is a schematic plan view of the embodiment depicted in figure 1; and
figure 5 is a schematic plan view of a last embodiment.

The apparatus according to the present invention comprises a conveyor belt one for supplying trays 2. The trays 2 each have a rectangular configuration of cavities 3 wherein plants 4 have been located.

Further the apparatus comprises a turntable 5 as is described in the Dutch patent application 1012438.

This turntable comprises clamps 6, wherein flowerpots 7 have been located. These flowerpots have already been filled with soil or a substrate 8. The room available for the plants for in the pot 7 is much larger than the available room in the trays 2. The apparatus according to the invention serves for transplanting the plants 4 from the cavities 3 in the two trays 2 towards the pots 7.

Use is made of a transplanting element which is indicated as a whole with 9, and which comprise a gantry-shaped frame 10, in which a cross-beam 11 has been provided. The cross-beam 11 is movable in the direction perpendicular to the direction of transport of the conveyor belt 1 and the turntable along the upper side of the gantry-like construction 10. At both sides of the cross-beam 11 grippers 12 have been provided. The construction of the grippers 12 is not the subject of the present application for which referred is to the Dutch application number 8802151. Besides is it possible to apply other gripper constructions in the present invention.

The operation of the apparatus according to the invention is as follows.

The gripper constructions 12 are above the trays, and indeed above two plants 4 in the position drawn. These grippers grip the plants 4 at their balls, remove these from the cavities 3 and move these upwardly. The construction needed therefore also forms part of the grippers concerned.

Subsequently the cross-beam 11 moves to the position above the flower pots 7, so that the gripped plants 4 are present above a flower pot 7. Subsequently the grippers plant the plants 4 in the flower pots, leave the plants and move backwards to their original position.

The following features are relevant for the present invention.

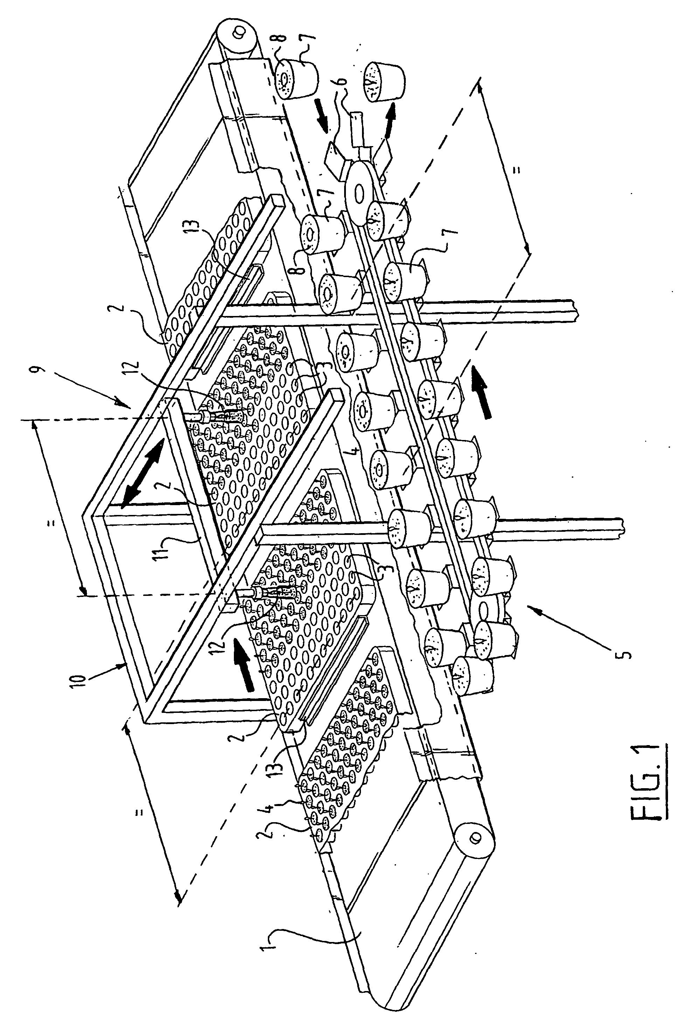

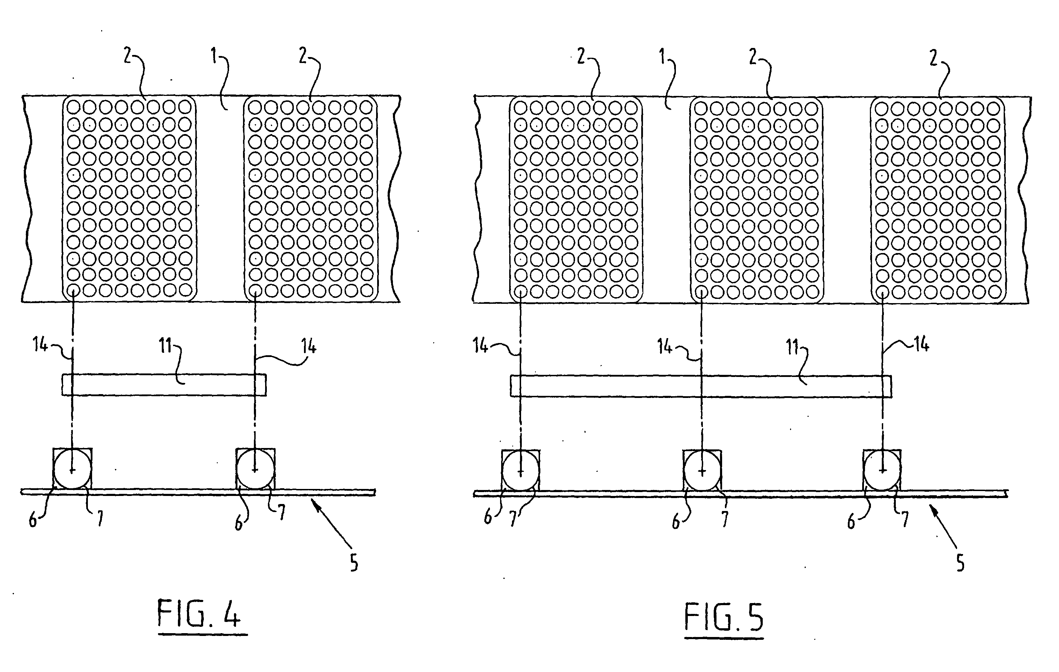

The distance between the two grippers 12 is equal to the pitch between the trays 2 and the pitch between flower pots 7. To the sides of the flower pots, the pitch is determined by the pitch of the clamps 6. To determine the pitch of the trays 2 the conveyor belt 2 is provided with stop elements 13 with a mutual equal distance. It will be clear that other constructions can be applied and that the invention is no way limited to the form of construction shown herein. In figure 4 the configuration depicted in figure 1 is depicted diagrammically from above. It appears that in this configuration a plant 4 is taken from two different trays which are located in different containers in the shape of different flower pots 7.

A similar configuration can also be used for simultaneously transporting three or even more plants per movement of the traverse 11. Such a configuration is depicted in figure 5. It is noted that the lines 14 each represent the movement of the plant.

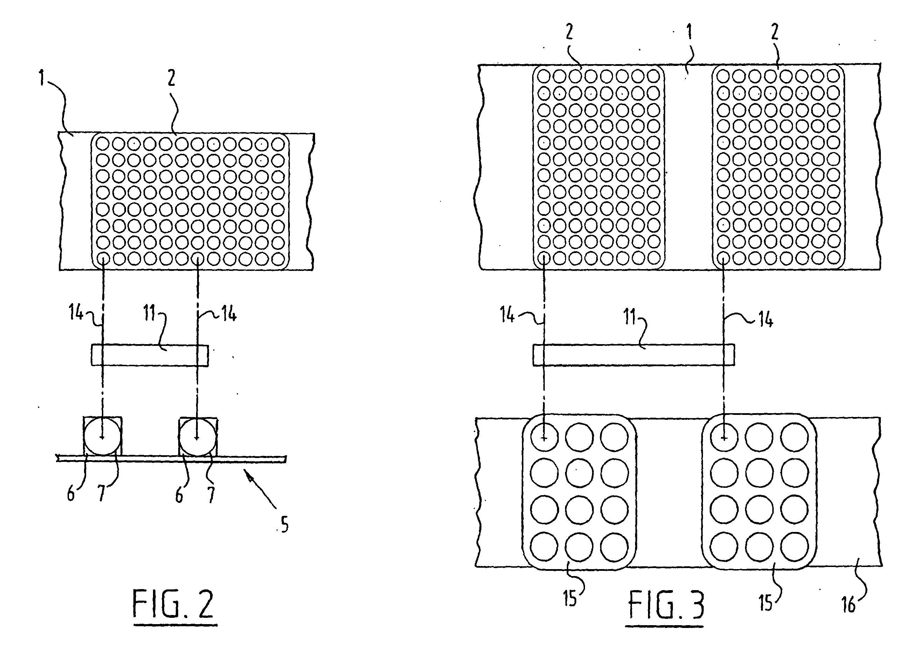

Figure 2 shows a configuration in which two plants are taken from the same tray 2. This configuration does not form part of the invention, because it does not show that multiple plants are gripped simultaneously from multiple containers, however, it shows that multiple grippers could grip plants from one and the same container. This does not enjoy all advantages offered by the invention as gripping the plant 4 in the tray by the right hand gripper may cause obstruction by the leaves of surrounding plants. This problem is less at the location of the left hand gripper, as this is on a corner. On the other hand, in the other embodiments one starts at a corner of a tray, so that the obstruction by surrounding plants is minimal. During the further emptying of the tray, this disadvantage obviates.

A last embodiment is shown in figure 3; herein the plants of trays with little cavities are brought to trays with large cavities.

Although this has not been shown in the drawings, it is possible to change the distance between the grippers during the movement between the containers, so that flexibility is obtained. It will be clear that several embodiments can be mutually varied without deviating from the invention as defined by the claims.

## Claims

1. Apparatus for transplanting plants (4) from containers (2) with small cavities (3) to containers with large cavities (7), comprising:
- first transport means (1) for supplying and removing containers(2) with small cavities (3);
- second transport means (5) for supplying and removing containers with large cavities (7);
- a moving and gripping device (9) with at least a first and a second movable gripper (12) for gripping the plants (4) in the containers (2) with the small cavities (3), transporting the plants (4) to the containers with the large cavities (7) and locating the plants (4) in the large cavities, **characterized in that** the apparatus comprises means for determining a pitch between the containers (2) with the small cavities (3).

2. Apparatus as claimed in claim 1, **characterized in that** the first transport means are formed by a conveyor belt (1) which is provided with stop elements (13) with a mutual equal distance to determine the pitch of the containers (2) with the small cavities (3).

3. Apparatus as claimed in claim 1 or 2, **characterized in that** the distance between the first and the second gripper (12) is adaptable.

4. Apparatus as claimed in one of the claim 1-3, **characterized in that** the first transport means (1) have been adapted for supplying containers (2) with more than one cavity (3) per container, and that the second transport means (5) have been adapted for supplying containers with one cavity (7) per container.

5. Apparatus as claimed in one of the claims 1-4, **characterized in that** the grippers (12) are located on a same carrier (11), which carrier (11) is movable between a position above the first transport means (1) and a position above the second transport means (5)

6. Apparatus as claimed in claim 5, **characterized in that**
- the direction of transport of both transport means (1, 5) extends mutually parallel;
- the carrier comprises a longitudinal element (11) on which the grippers (12) have been located; and
- the carrier (11) is movable substantially perpendicular to the direction of transport of the transporting means (1, 5).

7. Apparatus as claimed in claim 6, **characterized in that** the apparatus comprises a gantry construction (10), of which the legs have been located at both sides of the transport means (1, 5), and wherein the carrier (11) has been movably suspended to the horizontal part of the gantry construction (10).

8. Combination of an apparatus for transplanting plants from containers (2) with small cavities (3) to containers with large cavities (7) and at least two containers (2) with small cavities (3), comprising:
- first transport means (1) for supplying and removing containers (2) with small cavities (3);
- second transport means (5) for supplying and removing containers with large cavities (7);
- a moving and gripping device (9) with at least a first and a second movable gripper (12) for gripping the plants (4) in the containers (2) with the small cavities (3), transporting the plants (4) to the containers with the large cavities (7) and locating the plants (4) in the large cavities, wherein the apparatus comprises means for determining a first pitch between the containers (2) with the small cavities (3).

9. Combination as claimed in claim 8, **characterized by** at least two containers with large cavities (7), whereby the second transport means (5) have been adapted to supply the containers with large cavities (7) with a second pitch between the containers.

10. Combination as claimed in claim 8 or 9, **characterized in that** the moving and gripping device (9) comprises at least a third gripper (12), in which the first, second and at least third gripper (12) are located on a line

11. Combination as claimed in one of the claims 8-10, **characterized in that** the distance between the grippers (12) equals the first pitch at the moment of gripping the plants from the containers with small cavities.

12. Combination as claimed in one of the claims 8-11, **characterized in that** the distance between the grippers (12) is adaptable during the movement between the containers.

13. Combination as claimed in one of the claims 9-11, **characterized in that** the first pitch equals the second pitch and the distance between the grippers (12) equals the second pitch.

14. Method for transplanting plants (4) from containers (2) with small cavities (3) to containers with large cavities (7), comprising:
- transporting containers (2) with small cavities (3);
- transporting containers with large cavities (7);
- gripping the plants (4) in the containers (2) with the small cavities (3), transporting the plants (4) to the containers with the large cavities (7) and locating the plants (4) in the large cavities, **characterized by** separating the containers (2) with small cavities (3) by a first pitch and simultaneously gripping plants (4) from multiple containers.

15. Method according to claim 14, **characterized in that** only a single plant from a single container is gripped.

16. Method according to claim 14 or 15, **characterized in that** each of the plants (4) to be gripped is only bordered by plants (4) from two sides at the most.

17. Method according to one of the claims 14-16, **characterized in that** the first pitch is equal to the distance between the plants (4) being gripped.

18. Method according to one of the claims 14-17, **characterized in that** the first pitch is equal to the distance between the plants (4) being located in the large cavities (7).

19. Method according to one of the claims 14-17, **characterized in that** the distance between the plants (4) is changed during the transportation thereof between the containers (2, 7).

20. Apparatus adapted for performing the method according to one of the claims 14-19.

## Patentansprüche

1. Vorrichtung zum Umtopfen von Pflanzen (4) aus Containern (2) mit kleinen Öffnungen (3) in Container mit großen Öffnungen (7), umfassend:
- ein erstes Transporthilfsmittel (1) zur Zulieferung und zum Abtransport von Containern (2) mit kleinen Öffnungen (3) ;
- ein zweites Transporthilfsmittel (5) zur Zulieferung und zum Abtransport von Containern mit großen Öffnungen (7) ;
- eine Bewegungs- und Greifvorrichtung (9) mit mindestens einem ersten und einem zweiten beweglichen Greifer (12) zum Aufnehmen der Pflanzen (4) aus den Containern (2) mit den kleinen Öffnungen (3), zum Transport der Pflanzen (4) zu den Containern mit den großen Öffnungen (7) und zum Platzieren der Pflanzen (4) in die großen Öffnungen, **dadurch gekennzeichnet, dass** die Vorrichtung Hilfsmittel zum Bestimmen einer Trennung zwischen den Containern (2) mit den kleinen Öffnungen (3) enthält.

2. Vorrichtung nach Anspruch 1, **dadurch gekennzeichnet, dass** das erste Transporthilfsmittel durch ein Förderband (1) gebildet wird, welches mit Stoppelementen (13) mit einem beidseitigen gleichen Abstand zur Bestimmung der Trennung der Container (2) mit den kleinen Öffnungen (3) versehen ist.

3. Vorrichtung nach Anspruch 1 oder 2, **dadurch gekennzeichnet, dass** der Abstand zwischen dem ersten und dem zweiten Greifer (12) eingestellt werden kann.

4. Vorrichtung nach einem der Ansprüche 1-3, **dadurch gekennzeichnet, dass** das erste Transporthilfsmittel (1) zur Zulieferung von Containern (2) mit mehr als einer Öffnung (3) pro Container angepasst wurde, und dass das zweite Transportmittel (5) zur Zulieferung von Containern mit einer Öffnung (7) pro Container angepasst wurde.

5. Vorrichtung nach einem der Ansprüche 1-4, **dadurch gekennzeichnet, dass** die Greifer (12) sich auf demselben Träger (11) befinden, welcher Träger (11) zwischen einer Position über dem ersten Transporthilfsmittel (1) und einer Position über dem zweiten Transporthilfsmittel (5) bewegt werden kann.

6. Vorrichtung nach Anspruch 5, **dadurch gekennzeichnet, dass**
- die Transportrichtung beider Transporthilfsmittel (1, 5) beidseitig parallel verläuft;
- der Träger ein längslaufendes Element (11) enthält, auf welchem sich die Greifer (12) befinden; und
- der Träger (11) im Wesentlichen senkrecht zur Transportrichtung der Transporthilfsmittel (1, 5) beweglich ist.

7. Vorrichtung nach Anspruch 6, **dadurch gekennzeichnet, dass** die Vorrichtung eine Gerüstkonstruktion enthält (10), deren Beine sich an beiden Seiten der Transporthilfsmittel (1, 5) befinden, und wobei der Träger (11) am horizontalen Teil der Gerüstkonstruktion (10) beweglich aufgehängt ist.

8. Eine Kombination aus einer Vorrichtung zum Umtopfen von Pflanzen aus Containern (2) mit kleinen Öffnungen (3) in Containern mit großen Öffnungen (7) und mindestens zwei Container (2) mit kleinen Öffnungen (3), umfassend:
- ein erstes Transporthilfsmittel (1) zur Zulieferung und zum Abtransport von Containern (2) mit kleinen Öffnungen (3) ;
- ein zweites Transporthilfsmittel (5) zur Zulieferung und zum Abtransport von Containern mit großen Öffnungen (7) ;
- eine Bewegungs- und Greifvorrichtung (9) mit mindestens einem ersten und einem zweiten beweglichen Greifer (12) zum Aufnehmen der Pflanzen (4) aus den Containern (2) mit den kleinen Öffnungen (3), zum Transport der Pflanzen (4) zu den Containern mit den großen Öffnungen (7) und zum Platzieren der Pflanzen (4) in die großen Öffnungen, wobei die Vorrichtung Hilfsmittel zum Bestimmen einer ersten Trennung zwischen den Containern (2) mit den kleinen Öffnungen (3) enthält.

9. Eine Kombination nach Anspruch 8, **gekennzeichnet durch** mindestens zwei Container (2) mit großen Öffnungen (7), wobei das zweite Transporthilfsmittel (5) zur Zulieferung von Containern mit großen Öffnungen (7) mit einer zweiten Trennung zwischen den Containern angepasst wurde.

10. Eine Kombination nach Anspruch 8 oder 9, **dadurch gekennzeichnet, dass** die Bewegungs- und Greifvorrichtung (9) mindestens einen dritten Greifer (12) enthält, wobei der erste, zweite und der mindestens dritte Greifer (12) in einer Reihe angeordnet sind.

11. Eine Kombination nach einem der Ansprüche 8-10, **dadurch gekennzeichnet, dass** der Abstand zwischen den Greifern (12) der ersten Trennung zum Zeitpunkt des Aufnehmens der Pflanzen aus den Containern mit den kleinen Öffnungen entspricht.

12. Eine Kombination nach einem der Ansprüche 8-11, **dadurch gekennzeichnet, dass** der Abstand zwischen den Greifern (12) bei der Bewegung zwischen den Containern eingestellt werden kann.

13. Eine Kombination nach einem der Ansprüche 9-11, **dadurch gekennzeichnet, dass** die erste Trennung der zweiten Trennung und der Abstand zwischen den Greifern (12) der zweiten Trennung entspricht.

14. Verfahren zum Umtopfen von Pflanzen (4) aus Containern (2) mit kleinen Öffnungen (3) in Container mit großen Öffnungen (7), umfassend:
- Transport von Containern (2) mit kleinen Öffnungen (3) ;
- Transport von Containern mit großen Öffnungen (7);
- Aufnahme der Pflanzen (4) in den Containern (2) mit den kleinen Öffnungen (3), Transport der Pflanzen (4) zu den Containern mit den großen Öffnungen (7) und Platzierung der Pflanzen (4) in den großen Öffnungen, **gekennzeichnet durch** das von einander Scheiden der Container (2) mit den kleinen Öffnungen (3) **durch** eine erste Trennung und das gleichzeitige Aufnehmen von Pflanzen (4) aus mehreren Containern.

15. Verfahren nach Anspruch 14, **dadurch gekennzeichnet, dass** nur eine einzige Pflanze aus einem einzigen Container genommen wird.

16. Verfahren nach Anspruch 14 oder 15, **dadurch gekennzeichnet, dass** jede der Pflanzen (4), die aufgenommen werden muss, nur von Pflanzen (4) an höchstens zwei Seiten begrenzt wird.

17. Verfahren nach einem der Ansprüche 14-16, **dadurch gekennzeichnet, dass** die erste Trennung gleich dem Abstand zwischen den Pflanzen (4), die aufgenommen werden, ist.

18. Verfahren nach einem der Ansprüche 14-17, **dadurch gekennzeichnet, dass** die erste Trennung gleich dem Abstand zwischen den Pflanzen (4), die in die großen Öffnungen platziert werden, ist.

19. Verfahren nach einem der Ansprüche 14-17, **dadurch gekennzeichnet, dass** der Abstand zwischen den Pflanzen (4) während ihres Transports zwischen den Containern (2, 7) verändert wird.

20. Vorrichtung, die an die Ausführung des Verfahrens nach einem der Ansprüche 14-19 angepasst wurde.

## Revendications

1. Appareil de transport de plantes (4) de conteneurs (2) à petites alvéoles (3) dans des conteneurs à grandes alvéoles (7), comprenant :
- un premier dispositif de transport (1) pour approvisionner et enlever des conteneurs (2) à petites alvéoles (3) ;
- un second dispositif de transport (5) pour approvisionner et enlever des conteneurs à grandes alvéoles (7) ;
- un dispositif de déplacement et de préhension (9) comportant au moins une première et une deuxième pince amovible (12) pour la fixation des plantes (4) dans les conteneurs (2) à petites alvéoles (3), le transport des plantes (4) vers les conteneurs à grandes alvéoles (7) et le placement des plantes (4) dans les grandes alvéoles, **caractérisé en ce que** l'appareil comprend un dispositif permettant de déterminer un espacement entre les conteneurs (2) à petites alvéoles (3).

2. Appareil selon la revendication 1, **caractérisé en ce que** le premier dispositif de transport est constitué par un transporteur à bande (1) qui est pourvu d'éléments d'arrêt (13) avec une distance mutuelle égale pour déterminer l'espacement des conteneurs (2) à petites alvéoles (3).

3. Appareil selon la revendication 1 ou 2, **caractérisé en ce que** la distance entre la première et la deuxième pince (12) est adaptable.

4. Appareil selon l'une des revendications 1-3, **caractérisé en ce que** le premier dispositif de transport (1) a été adapté pour approvisionner des conteneurs (2) avec plus d'une alvéole (3) par conteneur, et que le second dispositif de transport (5) a été adapté pour approvisionner des conteneurs avec une alvéole (7) par conteneur.

5. Appareil selon l'une des revendications 1-4, **caractérisé en ce que** les pinces (12) sont situées sur un même support (11), ledit support (11) pouvant être déplacé entre une position au-dessus du premier dispositif de transport (1) et une position au-dessus du second dispositif de transport (5).

6. Appareil selon la revendication 5, **caractérisé en ce que**
- les directions de transport des deux dispositifs de transport (1, 5) sont parallèles ;
- le support comprend un élément longitudinal (11) sur lequel les pinces (12) ont été placées ;
- le support (11) peut être déplacé substantiellement perpendiculairement à la direction de transport des dispositifs de transport (1, 5) .

7. Appareil selon la revendication 6, **caractérisé en ce que** l'appareil comprend une construction à portique (10), dont les montants ont été placés des deux côtés des dispositifs de transport (1, 5), et où le support (11) a été suspendu selon un mode mobile à la partie horizontale de la construction à portique (10).

8. Combinaison d'un appareil de transport de plantes de conteneurs (2) à petites alvéoles (3) dans des conteneurs à grandes alvéoles (7) et d'au moins deux conteneurs (2) à petites alvéoles (3), comprenant :
- un premier dispositif de transport (1) pour approvisionner et enlever des conteneurs (2) à petites alvéoles (3) ;
- un second dispositif de transport (5) pour approvisionner et enlever des conteneurs à grandes alvéoles (7) ;
- un dispositif de déplacement et de préhension (9) comportant au moins une première et une deuxième pince amovible (12) pour la fixation des plantes (4) dans les conteneurs (2) à petites alvéoles (3), le transport des plantes (4) vers les conteneurs à grandes alvéoles (7) et le placement des plantes (4) dans les grandes alvéoles, où l'appareil comprend un dispositif permettant de déterminer un premier espacement entre les conteneurs (2) à petites alvéoles (3).

9. Combinaison selon la revendication 8, **caractérisée par** au moins deux conteneurs à grandes alvéoles (7), par laquelle le second dispositif de transport (5) a été adapté pour approvisionner les conteneurs à grandes alvéoles (7) avec un deuxième espacement entre les conteneurs.

10. Combinaison selon la revendication 8 ou 9, **caractérisée en ce que** l'appareil de déplacement et de préhension (9) comprend au moins une troisième pince (12), la première, la deuxième et la au moins troisième pince (12) étant situées sur une ligne.

11. Combinaison selon l'une des revendications 8-10, **caractérisée en ce que** la distance entre les pinces (12) est égale au premier espacement au moment de la fixation des plantes dans les conteneurs à petites alvéoles.

12. Combinaison selon l'une des revendications 8-11, **caractérisée en ce que** la distance entre les pinces (12) est adaptable au cours du déplacement entre les conteneurs.

13. Combinaison selon l'une des revendications 9-11, **caractérisée en ce que** le premier espacement est égal au second espacement et la distance entre les pinces (12) est égale au second espacement.

14. Méthode de transport de plantes (4) de conteneurs (2) à petites alvéoles (3) dans des conteneurs à grandes alvéoles (7), comprenant :
- le transport des conteneurs (2) à petites alvéoles (3) ;
- le transport des conteneurs à grandes alvéoles (7) ;
- la fixation des plantes (4) dans les conteneurs (2) à petites alvéoles (3), le transport des plantes (4) vers les conteneurs à grandes alvéoles (7) et le placement des plantes (4) dans les grandes alvéoles, **caractérisée par** la séparation des conteneurs (2) à petites alvéoles (3) par un premier espacement et la fixation simultanée de plantes (4) provenant de multiples conteneurs.

15. Méthode selon la revendication 14, **caractérisée en ce qu'**une seule plante d'un seul conteneur est fixée.

16. Méthode selon la revendication 14 ou 15, **caractérisée en ce que** chacune des plantes (4) à fixer est uniquement entourée par des plantes (4) de deux côtés au plus.

17. Méthode selon l'une des revendications 14-16, **caractérisée en ce que** le premier espacement est égal à la distance entre les plantes (4) en train d'être fixées.

18. Méthode selon l'une des revendications 14-17, **caractérisée en ce que** le premier espacement est égal à la distance entre les plantes (4) situées dans les grandes alvéoles (7).

19. Méthode selon l'une des revendications 14-17, **caractérisée en ce que** la distance entre les plantes (4) est modifiée durant leur transport entre les conteneurs (2, 7).

20. Appareil adapté pour appliquer la méthode selon l'une des revendications 14-19.
